**Europäisches Patentamt**

**European Patent Office**

**Office européen des brevets**

(19)

(11) Veröffentlichungsnummer : **0 142 786**
**B1**

(12) # EUROPÄISCHE PATENTSCHRIFT

(45) Veröffentlichungstag der Patentschrift :
**28.09.88**

(21) Anmeldenummer : **84113509.8**

(22) Anmeldetag : **08.11.84**

(51) Int. Cl.⁴ : **B 60 S   3/06**

(54) **Reinigungssystem für Autowaschanlagen.**

(30) Priorität : **18.11.83 DE 3341650**

(43) Veröffentlichungstag der Anmeldung :
**29.05.85 Patentblatt 85/22**

(45) Bekanntmachung des Hinweises auf die Patenterteilung : **28.09.88 Patentblatt 88/39**

(84) Benannte Vertragsstaaten :
**AT CH DE GB LI NL SE**

(56) Entgegenhaltungen :
**DE-A- 1 680 837**
**DE-A- 2 246 017**
**DE-A- 3 005 493**
**GB-A- 1 486 551**
**Die Akte enthält technische Angaben, die nach dem
Eingang der Anmeldung eingereicht wurden und die
nicht in dieser Patentschrift enthalten sind.**

(73) Patentinhaber : **Mr. Wash Auto-Service AG
Cecilienallee 82 Postfach 30 10 55
D-4000 Düsseldorf 30 (DE)**

(72) Erfinder : **Messing, Horst
Luttersiefen 3
D-5253 Lindlar (DE)**
Erfinder : **Enning, Joseph, Dr.
1920 Blue Ridge Road
Charlottesville, VA 22901 (US)**

(74) Vertreter : **Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)**

EP 0 142 786 B1

**Beschreibung**

Die Erfindung betrifft eine Reinigungsvorrichtung für Autowaschstraßen, bei denen das Fahrzeug mittels eines Förderbandes durch die Waschanlage hindurchgezogen wird und die Wascheinrichtungen stationär entlang der Förderrichtung des Fahrzeugs angeordnet sind, mit einem sich quer zur Förderrichtung erstreckenden, endseitig an einem um ein ortsfestes Drehgelenk schwenkbaren Hebelarmpaar gehaltenen und mittels diesem, der von der Seite gesehenen Fahrzeugkontur entsprechend, lageveränderbaren Reinigungselement. (Eine derartige Reinigungsvorrichtung ist in der Fachwelt aus der Praxis bekannt).

Grundsätzlich unterscheidet man zwei Systeme von automatischen Autowaschanlagen. Zum einen gibt es die sogenannten Portalwaschanlagen, bei denen das zu waschende Fahrzeug steht und die an einem Portal angeordneten Waschbürsten am Fahrzeug entlang geführt werden. Zum anderen gibt es die Waschstraßen, bei denen das Fahrzeug mittels eines Förderbandes durch die Waschanlage hindurchgezogen wird. Dabei sind die Wascheinrichtungen stationär entlang der Rollrichtung des Fahrzeuges angeordnet.

Aus der DE-A-16 80 837 ist eine Portalwaschanlage zum Waschen von Kraftfahrzeugen bekannt, bei der das Reinigungselement aus einem U-förmigen Brückenelement besteht, welches mit den Enden seiner Schenkel drehbeweglich an einem seinerseits beweglichen Fahrgestell gelagert ist. Bei dieser bekannten Anlage durchläuft das Reinigungselement eine kreisbogenförmige oder rollkurvenförmige Bewegung über das Fahrzeug hinweg. Dabei kann der Abstand der Reinigungselemente zum Fahrzeug in einem kleinen Schwenkbereich von unten nach oben durch eine Bewegung des Fahrzeuges oder auch des Fahrgestelles verringert werden. Auf einem größeren Teil des Schwenkbereiches von ca. 45° nach vorne bis ca. 45° nach hinten ist eine Verringerung des Abstandes zum Fahrzeug, beispielsweise ein Nachfahren der Kontur des Fahrzeuges nicht möglich.

Aus der DE-A-22 46 017 ist ebenfalls eine Portalwaschanlage bekannt, bei der das zu reinigende Kraftfahrzeug auf einem Waschplatz steht. Bei dieser bekannten Anlage besteht das Reinigungselement ebenfalls aus einem U-förmigen Brückenelement aus den Schwenkarmen und der oberen Verbindungsschiene. Diese Schwenkarme sind um eine Welle am Boden des Waschplatzes verschwenkbar gelagert. Zwischen den beiden Schwenkarmen ist ein sogenannter waagerecht liegender Sprühbalken in Schienen nach oben und nach unten verschiebbar geführt. Zum Reinigen des Fahrzeuges wird dieses unter das U-förmige Brückenelement gefahren, das in diesem Zustand senkrecht steht. Zum Reinigen der Oberfläche des Fahrzeuges werden die Schwenkarme sowohl nach vorne als auch nach hinten in einer kreisbogenförmigen Bewegung bewegt. Dabei liegt das Reinigungselement auf Rädern abgestützt auf der Fahrzeugoberfläche auf.

Bei den Waschstraßen bereitet eine gleichmäßig intensive Reinigung der von der Seite gesehenen Fahrzeugkontur, also der Front-, Dach- und Heckflächen insofern Schwierigkeiten, als die Verweilzeit der sich horizontal erstreckenden Reinigungsbürsten im Bereich horizontaler Fahrzeugflächen relativ größer als im Bereich vertikaler Fahrzeugflächen ist. Dies wirkt sich im Front- und Heckbereich des Fahrzeuges besonders nachteilig aus, weil gerade diese Partien im Straßenverkehr am stärksten verschmutzt werden.

Mit bekannten, sich quer zur Förderrichtung erstreckenden Bürstenwalzen oder Bedüsungsrohre zum Abspülen von Reinigungsmittelrückständen ist daher auch nur im Bereich von einigermaßen horizontal sich erstreckenden Fahrzeugflächen ein befriedigendes Reinigungsergebnis zu erzielen.

Um auch sogenannte Stufenhecks von Kraftfahrzeugen, die von der Dachhinterkante an sehr steil abfallen, gründlicher reinigen zu können, werden Nachführeinrichtungen für die Bürstenwalze verwendet. Hierbei ist ein Hebelarmpaar aus zweiarmigen Hebeln an einem ortsfesten, oberhalb des Fahrzeugs angeordneten Drehgelenk schwenkbar um eine etwa horizontale Nullage angeordnet. Von den in Förderrichtung weisenden Hebelarmenden hängen schaukelähnlich Tragarme herunter, deren untere freie Enden die rotierbare Bürstenwalze aufnehmen. An den entgegengesetzten Hebelarmenden sind Kontergewichte vorgesehen. Wenn die Front eines zu reinigenden Fahrzeugs die sich drehende Bürstenwalze erreicht, beginnt das Hebelarmpaar die Bürstenwalze der Kontur des sich vorwärts bewegenden Fahrzeugs entsprechend nachzuführen. Dabei werden die schaukelähnlichen Tragarme der Bürstenwalze mit Hilfe von Kolben/Zylinder-Einheiten so lange in einer vertikalen Lage gehalten, bis sich die Bürstenwalze am höchsten Punkt der Fahrzeugkontur befindet. Durch Betätigen der Kolben/Zylinder-Einheiten werden die Tragarme der Bürstenwalze nunmehr um etwa 45° nach schräg hinten gezogen, so daß die Bürstenwalze in diesem Fahrzeugbereich eine vergleichsweise kurze Verweilzeit hat. Sobald die Bürstenwalze die Hinterkante des Fahrzeugdaches erreicht, wird sie durch das Hebelarmpaar wieder gesenkt. Gleichzeitig wird die Bürstenwalze in Abhängigkeit von der Steilheit der Heckpartie des Fahrzeuges mittels der Kolben/Zylinder-Einheiten von den Tragarmen in Förderrichtung bewegt, wobei diese Bewegung im Bereich der größten Steilheit der Heckpartie am stärksten ist.

Diese bekannte Reinigungsvorrichtung hat den Nachteil, daß auch damit die steil abfallenden Front- und Heckpartien des Fahrzeuges nicht bis zu ihrem tiefsten Punkt hin gereinigt werden können. Insbesondere wird der Stoßstangen- und erst recht der noch darunter liegende Front- und Heckbereich überhaupt nicht von der Walzenbürste erreicht und eine ungleichmäßige Verweilzeit der Bürstenwalze in verschiedenen Flächenbereichen des zu reinigenden Fahrzeuges ist unvermeidbar.

Davon ausgehend liegt der Erfindung die Aufgabe zugrunde, eine Reinigungsvorrichtung für Autowaschstraßen nach der obengenannten Gattung, die im Oberbegriff des Anspruches I definiert ist, zu schaffen, mit der ein intensiveres Reinigen, insbesondere der vertikalen Fahrzeugflächen möglich ist. Dabei soll der Reinigungsvorgang nach Möglichkeit bereits tief unten an der Front-partie des Fahrzeuges beginnen und ebenso tief unten an der Heckpartie des Fahrzeuges enden.

Zur Lösung dieser Aufgabe wird vorgeschlagen, daß die Hebelarme des schwenkbaren Hebelarmpaares zu Beginn des Reinigungsvorganges entgegen der und am Ende des Reinigungsvorganges in die Förderrichtung schräg nach unten geneigt sind und dabei etwa im Fahrzeugbodenbereich enden und daß das Reinigungselement an dem schwenkbaren Hebelarmpaar entlang des Hebelweges verfahrbar angeordnet ist, wobei es sich zu Beginn und am Ende des Reinigungsvorganges jeweils am unteren Hebelarmende befindet.

Bei einer praktischen Ausführungsform der Erfindung sind die freien Hebelarmenden unter Bildung eines Portals verbunden und die Schwenkachse des Portals befindet sich in Fahrbahnnähe. Hierdurch wird ein synchrones Schwenken beider Hebelarme mit einem einzigen Antrieb möglich, ohne daß dabei die Fahrzeugbewegung behindert wird.

Wenn gemäß einer Weiterbildung der Erfindung das Reinigungselement aus um seine Achse, der Fahrzeugkontur entsprechend, schwenkbar angeordneten Reinigungsdüsen besteht, kann eine besonders intensive Hochdruckstrahlreinigung erfolgen. Es ist auch denkbar, solche Düsen mit Druckluft zu beaufschlagen, um somit Reinigungsrückstände und Reinigungsflüssigkeit vom Fahrzeug zu entfernen. Insbesondere wenn die Reinigungsdüsen nach einer weiterbildung der Erfindung entlang der Längserstreckung des Reinigungselementes oszillierbar angeordnet sind, können auch nur kleine Flächenelemente — die aber besonders gründlich — reinigende Düsen verwendet werden. Eine derartige Anordnung von entlang einer Linie zueinander beabstandeten Reinigungsdüsen, die einzeln oder insgesamt entlang der Längserstreckung des Reinigungselementes oszillierbar angeordnet sind, können grundsätzlich auch an seitlichen Vertikalflächen des Fahrzeuges zur Reinigung verwendet werden.

Gemäß einer Weiterbildung der Erfindung seitlich des Reinigungselementes angeordnete, von dessen Achse seitlich beabstandete Photozellen gestatten ein berührungsloses und abstandsgenaues Führen des Reinigungselementes entlang der Fahrzeugkontur, wobei im Falle von um ihre Längsachse schwenkbaren Reinigungselementen diese Photozellen synchron schwenkbar sein sollten, so daß auch diese Schwenkbewegung des Reinigungselementes der Fahrzeugkontur entsprechend vollzogen werden kann.

Wenn gemäß einer anderen Weiterbildung der Erfindung das Hebelarmpaar aus zweiarmigen Hebelarmen mit Gegengewichten an den von dem Reinigungselement fortweisenden Hebelarmen besteht, befindet sich das gesamte Reinigungssystem in jeder Schräglage der Hebelarme in einem völlig ausbalancierten Zustand, so daß nur geringe Kräfte zu seiner Bewegung erforderlich sind. Die gleiche Wirkung wird hinsichtlich der Bewegung des Reinigungselementes entlang des Hebelweges des Hebelarmpaares in einer weiterbildung der Erfindung dann erreicht, wenn ein entlang des Hebelweges des Hebelarmpaares verfahrbares, mit dem Reinigungselement wirkverbundenes Kontergewicht vorgesehen ist.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäßen Reinigungsvorrichtung für Autowaschstraßen schematisch dargestellt worden ist. In den Zeichnungen zeigt :

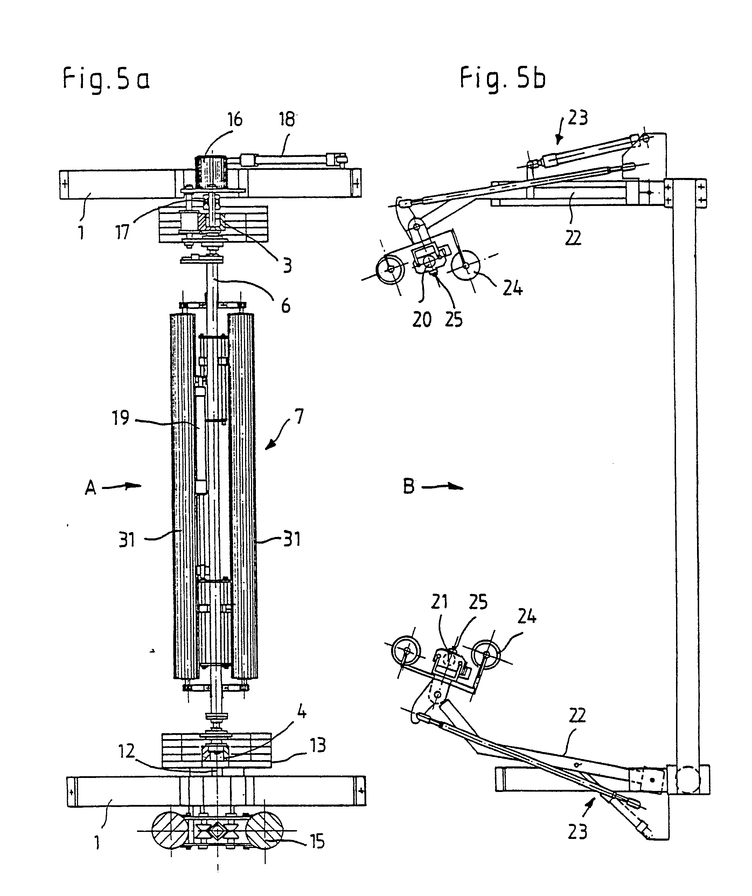

Fig. 1 eine Reinigungsvorrichtung in Ansicht quer zur Förderrichtung (Ansicht A gemäß Fig. 5a) ;

Fig. 2 eine ergänzende Reinigungsvorrichtung in derselben Ansicht wie in Fig. 1 (Ansicht B in Fig. 5b) ;

Fig. 3 eine Prinzipdarstellung der Funktionsweise der Reinigungsvorrichtung gemäß Fig. 1 und 2 ;

Fig. 4a/b dieselben Reinigungsvorrichtungen wie in Fig. 1 und 2 in Seitenansicht (Ansicht C gemäß Fig. 1 und 2) ;

Fig. 5a/b dieselbe Reinigungsvorrichtung in Draufsicht, z.T. im Schnitt ;

Fig. 6 eine andere Reinigungsvorrichtung in einer Ansicht gemäß Fig. 1.

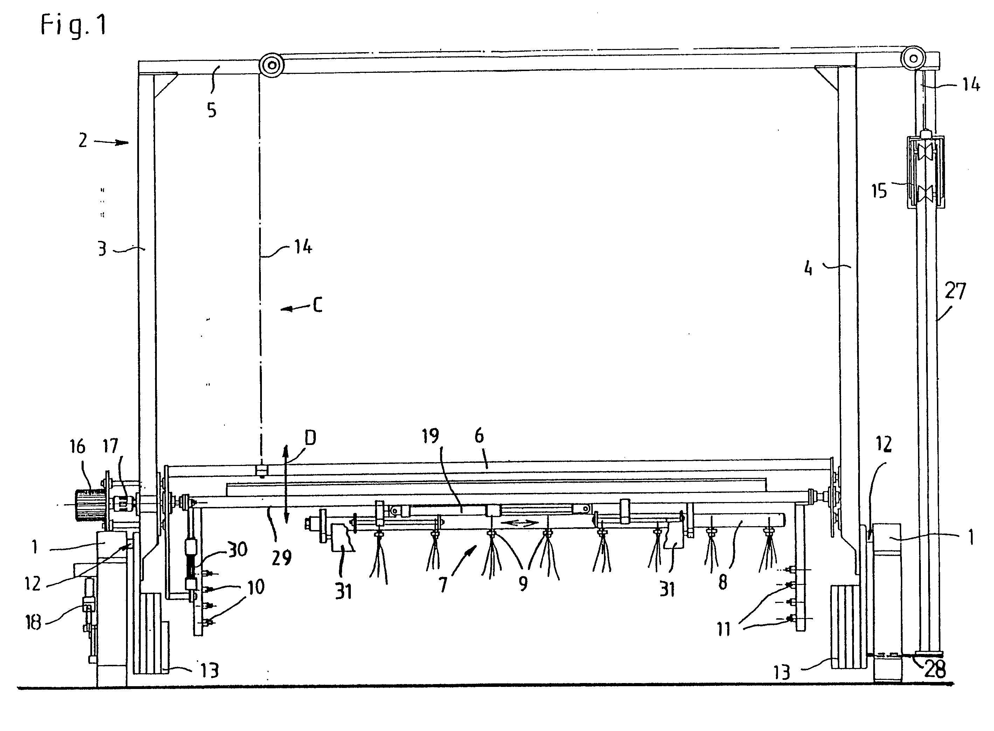

(Es folgt nunmehr die Figurenbeschreibung beginnend auf Seite 6 Zeile 26 der Anmeldungsunterlagen mit « Gemäß Fig. 1... ».)

Gemäß Fig. 1 besteht ein um Lagerböcke 1 schwenkbares Portal 2 aus einem Hebelarmpaar mit zweiarmigen geraden Hebeln 3, 4, deren obere freie Enden durch ein Joch 5 verbunden sind.

Eine Traverse 6 mit einem entlang dieser sich erstreckenden Reinigungselement 7 ist an seinen Enden geführt entlang der Hebelarme 3, 4 in Richtung der Pfeile D verfahrbar.

Das Reinigungselement 7 besteht aus einem um die Traversenachse schwenkbaren Düsenrohr 8 mit Düsen 9 zur fluidischen Hochdruckreinigung des nicht dargestellten Fahrzeuges. Ebenfalls schwenkbar mit dem Düsenrohr 8 sind an den Traversenenden Photozellen 10, 11 angebracht.

Zum Ausgleich der Massen befinden sich am Portal 2, unterhalb des Drehgelenkes 12 Gegengewichte 13. Die Masse der vertikal beweglichen Traverse 6 mit dem Düsenrohr 8 und den Photozellen 10, 11 wird über Seile 14 durch ein Kontergewicht 15 ausgeglichen, wobei eine Laufschiene 27 für das Kontergewicht 15 an dem Joch 5 und mittels einer Strebe 28 an dem zugeordneten Gegengewicht 13 befestigt ist.

Der vertikale Antrieb der Traverse 6 erfolgt über einen Hydromotor 16 mit einer Kupplung 17 mit Hilfe zwei Zahnräder und zwei Zahnstangen. Die Zahnräder sitzen auf einer innerhalb eines Vierkantrohres 29 sich erstreckenden Welle und greifen in beiden Zahnstangen, welche an den Hebelarmen 3, 4 vorgesehen sind. Die Welle mit den Zahnrädern wird durch den Hydromotor angetrieben.

Durch eine Kolben/Zylinder-Einheit 18 wird das Portal 2 geschwenkt. Die oszillierende Bewegung des Düsenrohres 8 erfolgt über eine Kolben/Zylinder-Einheit 19.

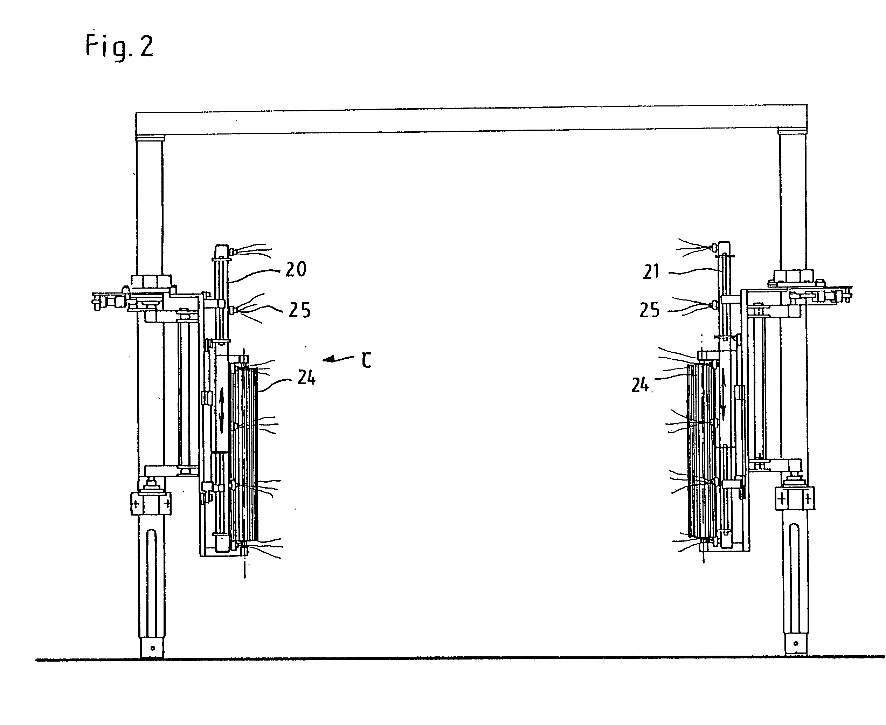

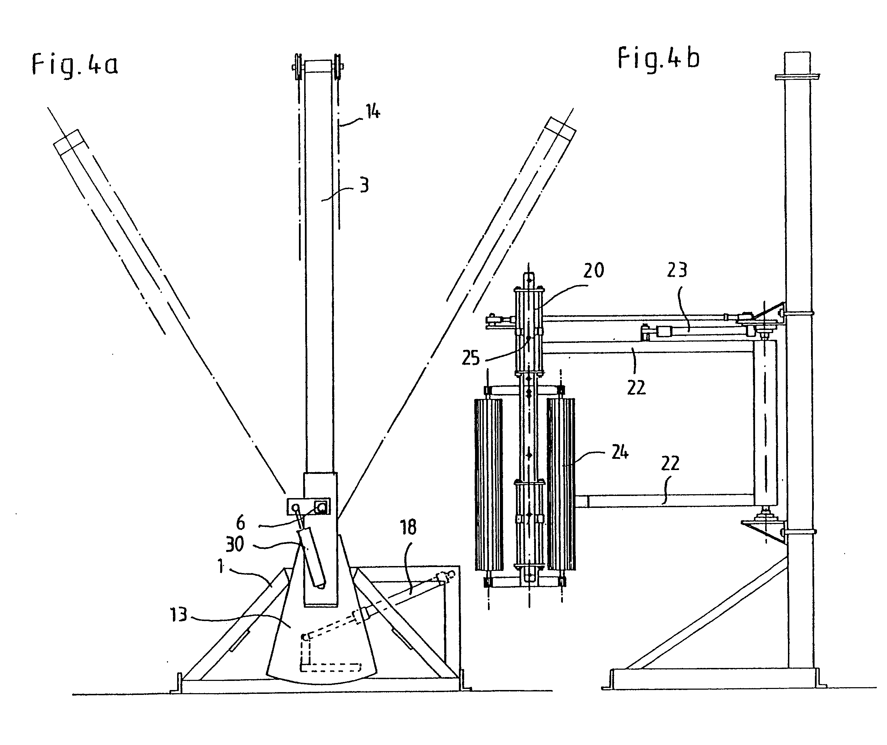

Gemäß Fig. 2 befinden sich links und rechts des nicht dargestellten zu waschenden Fahrzeuges, schwenkbar zu diesem, Düsenrohre 20, 21. Diese Rohre oszillieren in senkrechter Richtung. Die Bewegung dieser Düsenrohre zum Fahrzeug erfolgt über Schwenkarme 22 (Fig. 4b) mittels Kolben/Zylinder-Einheiten 23. Tastrollen 24 halten den Abstand der Seitendüsen zum Fahrzeug.

Über eine quer zum Fahrzeug angebrachte Photozelle oder einen Bodenschalter werden der Anfang und das Ende des Fahrzeuges abgetastet, wodurch die Seitendüsen zum Fahrzeug bzw. vom Fahrzeug weg geschwenkt werden.

Im waagerechten Düsenrohr 8 befinden sich neun Düsen 9, in den beiden senkrechten Düsenrohren 20, 21 je sechs Düsen 25.

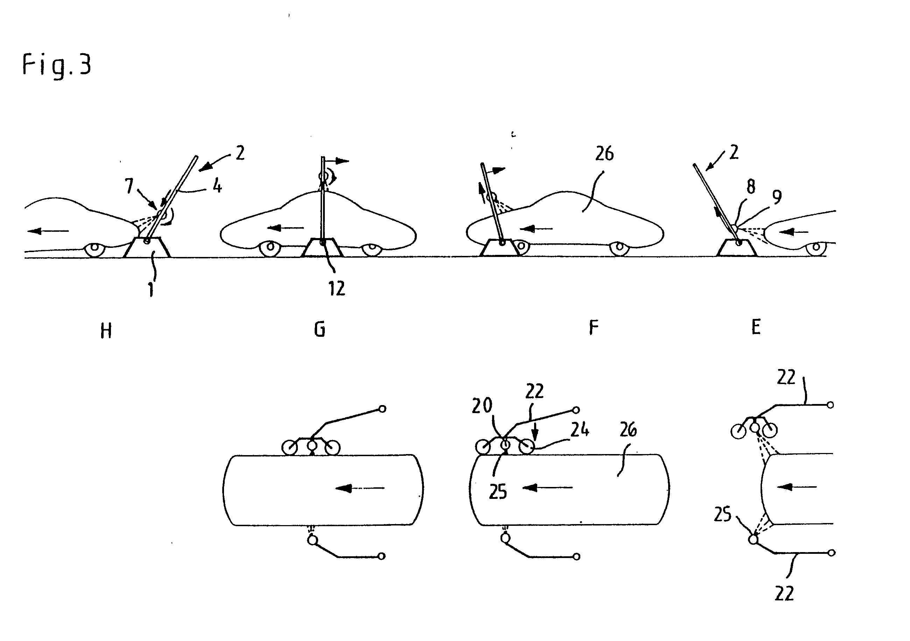

Das Reinigungssystem arbeitet gemäß Fig. 3 folgendermaßen :

Das Portal 2 steht in seiner Ausgangsstellung vom ankommenden Fahrzeug fortgeschwenkt und die seitlichen Schwenkarme 22 sind nach außen geschwenkt. Die Traverse mit dem Düsenrohr 8 befindet sich in unterster Position. Die Düsen 9 sind gegen das ankommende Fahrzeug gerichtet. Erreicht das Fahrzeug die Höhe der seitlichen Düsen 25 (Station E in Fig. 3), so schwenken diese zum Fahrzeug 26 und das Oszillieren beginnt.

Erreicht nun das Fahrzeug 26 die Photozellen 10, 11 am Reinigungselement 7, so beginnt die Traverse 6, angetrieben durch den Hydromotor 16, sich im Portal 2 nach oben zu bewegen, während ein unter Hochdruck stehendes Reinigungsfluid auf die Fahrzeugfront einwirkt. Durch jeweils vier hintereinander angeordnete Photozellen 10, 11, in Verbindung mit einem Proportionalventil, werden die Düsen 9 berührungslos über die Konturen des Fahrzeuges 26 geführt (Station F in Fig. 3). Erreicht die Traverse 6 und somit das während der ganzen Zeit oszillierende Düsenrohr 8 etwa die Höhe der Windschutzscheibe des Fahrzeuges, so wird das Portal 2 mittels der Kolben/Zylinder-Einheit 18 langsam gegen die Förderrichtung geschwenkt. Gleichzeitig schwenkt das Düsenrohr 8, angetrieben von einer Kolben/Zylinder-Einheit 30 (Fig. 1), in die Richtung der zu bedüsenden Fahrzeugfläche (Station G in Fig. 3).

Wenn das Portal 2 sich in einer über die Senkrechte hinaus gegen die Förderrichtung geschwenkten Endposition befindet (Station H gemäß Fig. 3), gleitet die Traverse 6 nach unten. Bedingt durch die Schräglage des Portals 2 und des entsprechend geschwenkten Düsenrohres 8 laufen die Düsen 9 dem sich entfernenden Fahrzeug 26 nach. Hat die Traverse 6 ihre unterste Position erreicht, so schwenkt das Portal in seine Ausgangslage und das Düsenrohr 8 richtet sich gegen das nächste ankommende Fahrzeug. Die seitlichen Düsen 25 fahren in ihre Ausgangsstellung, sobald das Fahrzeug deren Bedüsungsbereich verlassen hat.

Durch die Erfindung wird erreicht, daß der Reinigungsvorgang an der Vorderseite des Fahrzeuges sehr weit unten beginnen kann und im Frontbereich aufgrund des sich schräg nach oben bewegenden Düsenrohres (vom Fahrzeug weg) ausreichend lange und gründlich gereinigt wird. Der Reinigungsvorgang wird somit intensiver. Durch das Umschwenken des Düsenrohres und des Portales wird ein wirkungsvoller Nachlauf erreicht. Die Photozellen halten immer einen sicheren, berührungslosen Abstand zum Fahrzeug. Die Düsen fahren die Kontur des Fahrzeuges genau bis zur Höhe der hinteren Stoßstange nach.

Im übrigen verhindern Tastrollen 31 seitlich des Düsenrohres 8, daß die Düsen 9 das Fahrzeug beschädigen können.

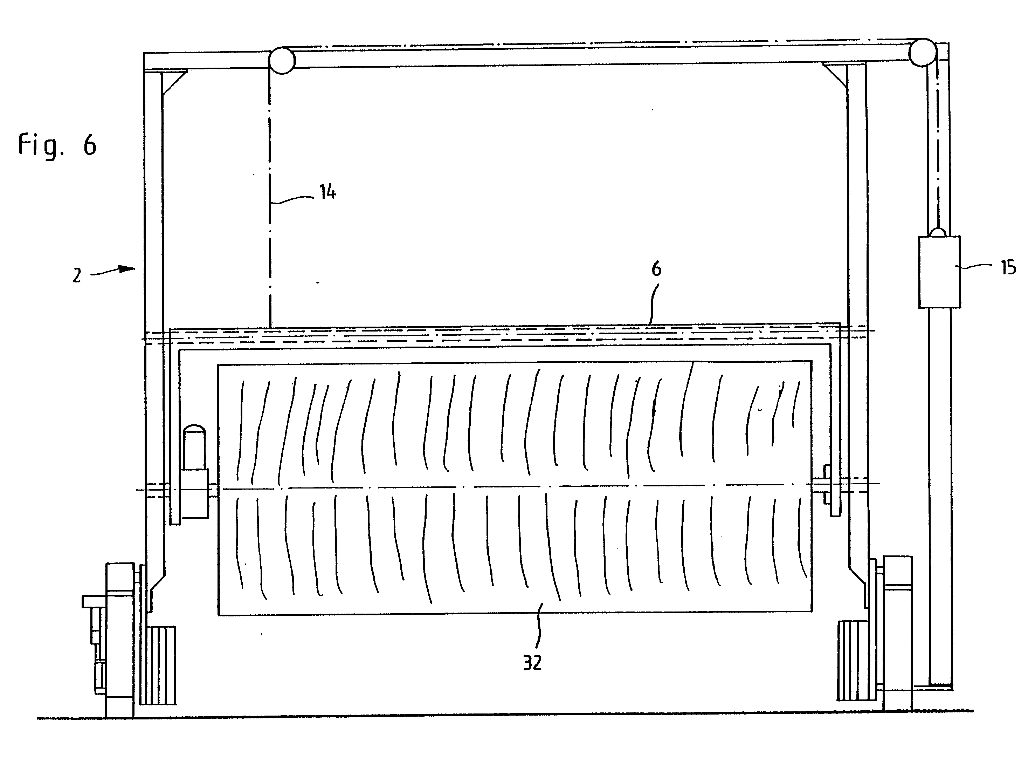

Es versteht sich, daß anstelle des Düsenrohres 8 auch eine rotierbare Bürstenwalze 32 (Fig. 6) verwendet werden kann. Dann befindet sich die Welle mit den beiden Zahnrädern, welche entlang der Zahnstangen an den Hebelarmen 3, 4 laufen, in der höher gelegten Traverse 6. Dadurch wird ein Verkanten der Traverse vermieden. Das Kontergewicht 15 ist so ausgelegt, daß die Bürstenwalze 32 durch Eigengewicht nach unten rollt. Durch die Schrägstellung des Portals 2 wird die Bürstenwalze 32 durch das Fahrzeug 26 hochgeschoben und läuft nach dem Schwenken des Portals dem Wagen nach bis in die unterste Position.

Bezugszeichenliste

| | | |
|---|---|---|
| 1 | Lagerbock | A Ansicht |
| 2 | Portal | B Ansicht |
| 3 | Hebelarm | C Ansicht |
| 4 | Hebelarm | D Bewegungsrichtung |
| 5 | Joch | E Station |
| 6 | Traverse | F Station |
| 7 | Reinigungselement | G Station |
| 8 | Düsenrohr | H Station |
| 9 | Düse | |
| 10 | Photozelle | |
| 11 | Photozelle | |
| 12 | Drehgelenk | |
| 13 | Gegengewicht | |
| 14 | Seil | |
| 15 | Kontergewicht | |
| 16 | Hydromotor | |
| 17 | Kupplung | |
| 18 | Kolben/Zylinder-Einheit | |

19 Kolben/Zylinder-Einheit
20 Düsenrohr
21 Düsenrohr
22 Schwenkarm
23 Kolben/Zylinder-Einheit
24 Tastrolle
25 Düse
26 Fahrzeug
27 Laufschiene
28 Strebe
29 Vierkantrohr
30 Kolben/Zylinder-Einheit
31 Tastrolle
32 Bürstenwalze

**Patentansprüche**

1. Reinigungsvorrichtung für Autowaschstraßen, bei denen das Fahrzeug mittels eines Förderbandes durch die Waschanlage hindurchgezogen wird und die Wascheinrichtungen stationär entlang der Förderrichtung des Fahrzeuges angeordnet sind, mit einem sich quer zur Förderrichtung erstreckenden, endseitig an einem um ein ortsfestes Drehgelenk (12) schwenkbaren Hebelarmpaar gehaltenen und mittels diesem, der von der Seite gesehenen Fahrzeugkontur entsprechend, lageveränderbaren Reinigungselement (7), dadurch gekennzeichnet, daß die Hebelarme (3, 4) des schwenkbaren Hebelarmpaares zu Beginn des Reinigungsvorganges entgegen der und am Ende des Reinigungsvorganges in die Förderrichtung schräg nach unten geneigt sind und dabei etwa im Fahrzeugbodenbereich enden und daß das Reinigungselement (7) an dem schwenkbaren Hebelarmpaar entlang des Hebelweges verfahrbar angeordnet ist, wobei es sich zu Beginn und am Ende des Reinigungsvorganges jeweils am unteren Hebelarmende befindet.

2. Reinigungsvorrichtung nach Anspruch 1, dadurch gekennzeichnet, daß die freien Hebelarmenden unter Bildung eines Portals (2) verbunden sind und sich die Schwenkachse (12) des Portals (2) in Fahrbahnnähe befindet.

3. Reinigungsvorrichtung nach Anspruch 1 oder 2, dadurch gekennzeichnet, daß das Reinigungselement (7) aus um seine Achse, der Fahrzeugkontur entsprechend, schwenkbar angeordneten Reinigungsdüsen (9) besteht.

4. Reinigungsvorrichtung nach Anspruch 3, dadurch gekennzeichnet, daß die Reinigungsdüsen (9) entlang der Längserstreckung des Reinigungselementes (7) oszillierbar angeordnet sind.

5. Reinigungsvorrichtung nach einem der Ansprüche 1 bis 4, gekennzeichnet durch seitlich des Reinigungselementes (7) angeordnete, von dessen Achse seitlich beabstandete Photozellen (10, 11).

6. Reinigungsvorrichtung nach einem der Ansprüche 1 bis 5, dadurch gekennzeichnet, daß das Hebelarmpaar aus zwei zweiarmigen Hebelarmen (3, 4) mit Gegengewichten (13) an den von dem Reinigungselement (7) fortweisenden Hebelarmenden besteht.

7. Reinigungsvorrichtung nach einem der Ansprüche 1 bis 6, gekennzeichnet durch ein entlang des Hebelweges des Hebelarmpaares verfahrbares, mit dem Reinigungselement (7) wirkverbundenes Kontergewicht (15).

**Claims**

1. A cleaning device for car washes of the kind in which the vehicle is drawn through the car wash by means of a conveyor belt and the washing devices are arranged to be stationary along the direction of conveyance of the vehicle, comprising a cleaning element (7) extending transversely of the direction of conveyance, mounted at the end on a pair of lever arms pivotable about a fixed pivot (12), the cleaning element position being variable by means of said pair of lever arms to match the vehicle contour as seen from the side, characterised in that the lever arms (3, 4) of the pivotable pair of lever arms are inclined downwardly at an angle in the opposite direction to the direction of conveyance at the start of the cleaning operation and in the direction of conveyance at the end of the cleaning operation and terminate approximately in the region of the vehicle floor and in that the cleaning element (7) is disposed on the pivotable pair of lever arms so as to be mobile along the lever travel, being situated at the bottom lever arm end in each case at the beginning and end of the cleaning operation.

2. A cleaning device according to claim 1, characterised in that the free lever arm ends are connected to form a portal (2) and the pivot axis (12) of the portal (2) is situated near the roadway.

3. A cleaning device according to claim 1 or 2, characterised in that the cleaning element (7) consists of cleaning nozzles (9) which are pivotable about the axis of the cleaning element (7) to match the vehicle contour.

4. A cleaning device according to claim 3, characterised in that the cleaning nozzles (9) are disposed to oscillate along the length of the cleaning element (7).

5. A cleaning device according to any one of claims 1 to 4, characterised by photoelectric cells (10, 11) disposed laterally of the cleaning element (7) and spaced laterally from the axis thereof.

6. A cleaning device according to any one of claims 1 to 5, characterised in that the pair of lever arms consists of two two-armed lever arms (3, 4) with counterweights (13) at the lever arm ends extending away from the cleaning element (7).

7. A cleaning device according to any one of claims 1 to 6, characterised by a counterweight (15) movable along the lever travel of the pair of lever arms and operatively connected to the cleaning element (7).

**Revendications**

1. Dispositif de nettoyage pour lignes de lavage d'automobiles, dans lesquelles le véhicule est déplacé dans l'installation de lavage au moyen d'une bande transporteuse, les organes de lavage étant disposés à poste fixe dans la direction de déplacement du véhicule, avec un élément de nettoyage (7) s'étendant transversalement à la direction de transport du véhicule, maintenu à ses extrémités par un couple de leviers pivotants autour d'une articulation (12) à position fixe, la position de l'élément de nettoyage étant variable au moyen du couple de leviers pour s'adapter au contour du véhicule vu de côté, caractérisé en ce que les leviers (3, 4) du couple de leviers pivotants sont inclinés obliquement vers le bas, à l'opposé du sens de déplacement au début de l'opération de nettoyage et dans le sens de déplacement à la fin de l'opération de nettoyage en se terminant alors sensiblement dans la zone du plancher du véhicule et en ce que l'élément de nettoyage (7) est disposé sur le couple de leviers pivotants pour se déplacer suivant le trajet des leviers, cet élément se trouvant à l'extrémité inférieure des leviers au début et à la fin de l'opération de nettoyage.

2. Dispositif de nettoyage selon la revendication 1, caractérisé en ce que les extrémités libres des leviers sont reliées en formant un portique (2), l'axe de pivotement (12) du portique (2) étant à proximité de la chaussée.

3. Dispositif de nettoyage selon la revendication 1 ou 2, caractérisé en ce que l'élément de nettoyage (7) est constitué de buses de nettoyage (9) disposées pour pivoter autour de son axe en fonction du contour du véhicule.

4. Dispositif de nettoyage selon la revendication 3, caractérisé en ce que les buses de nettoyage (9) sont disposées pour osciller dans la direction de la longueur de l'élément de nettoyage (7).

5. Dispositif de nettoyage selon l'une quelconque des revendications 1 à 4, caractérisé par des cellules photo-électriques (10, 11) disposées latéralement à l'élément de nettoyage (7) et situées à distance de l'axe de cet élément en direction latérale.

6. Dispositif de nettoyage selon l'une quelconque des revendications 1 à 5, caractérisé en ce que le couple de leviers se compose de deux leviers à deux bras (3, 4) munis de contrepoids (13) aux extrémités des bras dirigés à l'opposé de l'élément de nettoyage (7).

7. Dispositif de nettoyage selon l'une quelconque des revendications 1 à 6, caractérisé par un contrepoids (15) disposé pour se déplacer suivant le trajet des leviers du couple de leviers et qui est en liaison de fonctionnement avec l'élément de nettoyage (7).

Fig.1

Fig. 2

21

25

24

20

25

24

# Fig.3

H                         G                        F                       E

0 142 786

Fig.4b

Fig.4a

0 142 786

## Fig. 5a

## Fig. 5b

5

Fig. 6

0 142 786